# EUROPÄISCHE PATENTSCHRIFT

(11) **EP 1 445 138 B1**
(45) Veröffentlichungstag und Bekanntmachung des Hinweises auf die Patenterteilung: **23.11.2005**
(21) Anmeldenummer: 04000719.7
(22) Anmeldetag: 15.01.2004
(51) Int. Cl.: B60K 5/12, B61C 9/48

(54) **Elastisches Lager, insbesondere Keillager, und Rahmen**
Elastic support, in particular wedge-shaped support, and frame
Support élastique, en particulier en forme de cale, et chassis

(30) Priorität: 17.01.2003 DE 10301916
(43) Veröffentlichungstag der Anmeldung: 11.08.2004
(73) Patentinhaber: Voith Turbo GmbH, 89522 Heidenheim (DE)
(72) Erfinder: Exner, Jochen, 89564 Nattheim (DE); Harsch, Martina, 89522 Heidenheim (DE)
(74) Vertreter: Dr. Weitzel & Partner

(56) Entgegenhaltungen:
- EP-A- 0 449 228
- EP-A- 1 132 244
- DE-A- 3 610 216
- DE-A- 10 061 127
- DE-A- 19 536 737
- DE-U- 8 521 933

## Beschreibung

Die Erfindung betrifft ein Lager, insbesondere ein Keillager zur Lagerung eines Rahmens an einem ortsfesten Bauteil in einem Fahrzeug; insbesondere Schienenfahrzeug, im Einzelnen mit den Merkmalen aus dem Oberbegriff des Anspruches 1; ferner einen Rahmen.

Rahmen sind in einer Vielzahl von Ausführungen für die unterschiedlichsten Anwendungsfälle vorbekannt. Insbesondere in Antriebssträngen von Fahrzeugen kommt diesen eine besondere Bedeutung zur Abstützung der durch den Betrieb der Komponenten des Antriebsstranges hervorgerufenen Kräfte zu. Dies gilt insbesondere für die Hauptmasse des Antriebsstranges, welche in der Regel von einer Antriebsmaschine, die vorzugsweise als Verbrennungskraftmaschine vorliegt und eventuell einer Getriebebaueinheit, die mit der Antriebsmaschine eine bauliche Einheit in Form einer Motor-Getriebeeinheit bildet, gebildet wird. Dabei ist es gewünscht, die Kräfte möglichst direkt in die Tragelemente des Rahmens einzuleiten, so dass dieser keinerlei Verformungen unterworfen wird. Stellvertretend wird dabei auf die Druckschrift DE 100 61 127.3 verwiesen, aus welcher ein Rahmenkonzept zur Lagerung von Komponenten des Antriebsstranges von Schienenfahrzeugen vorbekannt ist, welches wenigstens zwei Querträger umfasst, die unter Bildung einer Montage- und Anordnungsebene für den Hilfsrahmen über einen Längsträger miteinander verbunden sind. Der Rahmen selbst ist beispielsweise für den Einsatz in Schienenfahrzeugen an einem ortsfesten Bauteil im Fahrzeug, beispielsweise dem Wagenkasten angelenkt. Dazu finden in der Regel standardisierte Lager Verwendung. Es hat sich jedoch gezeigt, dass diese oftmals den Anforderungen nicht gerecht werden oder aber eine spezielle Auslegung erfordern, die wiederum der Verwendung standardisierter kostengünstiger Lager widerspricht. Ferner sind diese nicht geeignet, undefinierte Belastungen in der Rahmenstruktur aufgrund auftretender Belastungen infolge der Verdrillung oder Verbiegung des Anschlussbauteiles in Form des Wagenkastens zu unterbinden oder abzuschwächen. Derartige Lager sind in unterschiedlichsten Ausführungen aus dem Stand der Technik vorbekannt. Stellvertretend wird auf die nachfolgend genannten Druckschriften verwiesen, welche Keillager unterschiedlichsten Aufbau offenbaren:
1) AT 293113
2) DE 195 36 737 A1

Aus der Druckschrift AT 293113 ist ein Keillager vorbekannt, welches ein sogenanntes Gummimetallbauteil in Form eines Innenteils umfasst, das zwischen gleichsinnig, vorzugsweise parallelflächigen Metallteilen in Form eines Außenteils angeordnet ist und mit diesem festhaftend verbundenen, auf Schub-oder Druck beanspruchte Gummikörpern umfasst. Die Verbindung erfolgt über Haftmittelverfahren, d. h. eine Anvulkanisierung ist ebenfalls möglich. Dabei besitzen die das Außenteil bildenden Metallteile zur lotrechten Richtung geneigte und vorzugsweise parallele Haftflächen für die Einbringung der Gummikörper, wobei die Haftflächen auch in sich gewölbt oder in einem bestimmten Winkel zueinander geneigt sein können. Für diese Ausführung ist das Außenteil mehrteilig ausgeführt, was in einer erforderlichen separaten Anbindung jedes einzelnen Teiles resultiert. Ferner werden die Gummikörper zwischen die äußeren Metallteile und innere Metallteile eingebracht und dort über entsprechende Haftmittel miteinander verbunden, wobei es sich bei dieser Ausführung um eine nicht lösbare Verbindung handelt. Dies bedeutet, dass ein Wechsel einzelner Elemente des Lagers nicht möglich ist, sondern immer das gesamte Lager auszubauen ist. Dies ist insbesondere durch die erforderliche separate Anbindung der einzelnen äußeren Metallteile sehr aufwendig.

Aus der Druckschrift DE 195 36 737 A1 ist eine Ausführung eines Keillagers in Form eines Schwingungsdämpfers mit progressiver Federkennlinie vorbekannt, welches ein Außenteil zur Anbindung an die die Kräfte abstützenden Bauelemente umfasst und ferner ein Innenteil, das vom Außenteil umschlossen wird. Das Innenteil ist als Metallteil ausgeführt und an der Unter- und Oberkante ballig ausgeführt. Ferner sind Gummisegmente vorgesehen, die zwischen dem Innenteil und dem Außenteil angeordnet sind. Diese sind in Umfangsrichtung um den Innenkeil verteilt angeordnet und ferner im Zustand der Anordnung des Innenteils im vom Außenteil umschlossenen Bereich an den Außenteil sowie den Innenteil anvulkanisiert. Eine lösbare Verbindung ist nicht gegeben. Auch hier ist im Versagensfall oder im Falle einer Beschädigung des Lagers ein Austausch des gesamten Lagers erforderlich.

Der Erfindung liegt daher die Aufgabe zugrunde, ein Lager zur Lagerung von Rahmen an Anschlussbauteilen, insbesondere Wagenkästen von Schienenfahrzeugen zu entwickeln, welches mit einfachen Mitteln kostengünstig dimensionierbar ist und dennoch montage- und wartungsfreundlich. Dabei ist insbesondere auf eine einfache Austauschbarkeit, auch einzelner Elemente, abzustellen.

Die erfindungsgemäße Lösung ist durch die Merkmale des Anspruchs 1 charakterisiert. Vorteilhafte Ausgestaltungen sind in den Unteransprüchen wiedergegeben.

Das erfindungsgemäß gestaltete Lager, insbesondere Keillager umfasst wenigstens zwei Teilelemente - ein Innenteil zur Aufnahme eines Lagerbolzens oder anderen Elementes und ein das Innenteil wenigstens teilweise bezogen auf die Achse der Anordnung des Lagerbolzens in Umfangsrichtung umschließendes Außenteil. Das Lager ist frei von einem Lagergehäuse. Der Außenteil bildet damit direkt die Anlage bzw. Anschlag- und Verbindungsflächen bei Kopplung mit einem Anschlussbauelement, beim Einsatz in Schienenfahrzeugen beispielsweise bei Lagerung des Rahmens der Wagenkasten. Erfindungsgemäß sind Innenteil und Außenteil lösbar miteinander verbunden. Dies bedeutet, dass jederzeit auch im montierten Zustand eine Trennung beider Elemente voneinander möglich ist. Das Außenteil umfasst wenigstens zwei Teilbereiche - einen ersten Teilbereich, der die Anschlag- und Kontaktflächen bei Verbindung des Lagers mit dem Anschlussbauelement bildet und einen zweiten Teilbereich, der mit dem ersten Teilbereich das Innenteil wenigstens teilweise bezogen auf die Achse des Lagerbolzens in Umfangsrichtung umschließt. Die Anlage- und Kontaktflächen zur Verbindung mit einem Anschlussbauelement sind am Außenteil angeordnet. Dieses wird dabei von unten an das Anschlussbauelement, insbesondere die Längstragprofile des Wagenkastens beim Einsatz zur Lagerung eines Rahmens in einem Schienenfahrzeug montiert. Das Außenteil ist damit direkt und eigenschaftstypisch ohne Hilfsgehäuse mit dem Anschlussbauelement verbindbar. Unter dem Begriff Anlage- und Kontaktflächen werden die Flächenbereiche verstanden, die bei Realisierung einer lösbaren Verbindung mit dem Anschlussbauelement an diesem zum Anliegen kommen und in deren Bereich die Verbindungselemente bzw. die erforderliche Umgebung für die Verbindungselemente, beispielsweise Durchgangsöffnungen etc. angeordnet sind. Ferner ist zwischen Innenteil und Außenteil wenigstens ein elastisches Element mit einer Steifigkeit in einem Bereich von einschließlich 500 bis 10.000 N/mm angeordnet, vorzugsweise ein Gummi-Paket. Durch die Wahl des Werkstoffes und Auslegung besteht die Möglichkeit, die Federkennlinie des Lagers an spezielle Einsatzerfordernisse frei anzupassen. Das elastische Element bildet dabei entweder mit dem Innenteil eine integrale Einheit oder liegt als separates Element vor, das als Zwischenelement ausgeführt und als dieses zwischen Innenteil und Außenteil eingefügt wird oder mit dem Innenteil zu einer baulichen Einheit zusammen fügbar ist. Erfindungsgemäß erfolgt die Verbindung des Innenteils mit dem Außenteil über ein entsprechend der Kontur des Innenumfanges des Außenteils gebogenes Element, vorzugsweise ein konisch zulaufendes gebogenes Blech, welches zwischen dem Innenteil und dem Außenteil angeordnet ist und das Innenteil und das bzw. die elastischen Elemente wenigstens teilweise in Umfangsrichtung bezogen auf die Lagerachse zur Aufnahme des Lagerbolzens am Innenteil umschließt. Diese Lösung vermeidet eine feste stoffschlüssige Verbindung zwischen Innenteil und Außenteil und ermöglichst über das konisch zulaufend gebogene Blech eine einfache Montage und Demontage indem dieses mit dem Innenteil auf einfache Art und Weise in den vom Außenteil umschlossenen Bereich eingeführt werden kann. Ferner ermöglichst das konisch zulaufend gebogene Blech verschiedene Möglichkeiten der Verbindung zwischen Innenteil und Außenteil, die reversibel, d. h. lösbar sind. Im einfachsten Fall ist dabei das konisch zulaufend gebogene Blech derart gestaltet, dass dieses mit seiner Außenkontur an die Innenkontur des Außenteils angepasst ist und zumindest mit den in vertikaler Richtung ausgerichteten Blechbereichen ein Verklemmen zwischen Außenteil und Innenteil bzw. der Einheit aus Blech, Gummipaket und Innenteil ermöglicht.

Die lösbare Verbindung zwischen Innenteil und Außenteil wird entweder durch Kraft- oder Formschluss oder eine Kombination aus beiden realisiert. Die Verbindung kann dabei beispielsweise durch Verklemmen oder die Wahl entsprechender Verbindungselemente erfolgen. Im erstgenanten Fall wird dabei eine Passung zwischen Innenteil und Außenteil vorgesehen, während im zweiten Fall beispielsweise die Kopplung direkt unter Verwendung von Befestigungsmitteln, beispielsweise Schraubverbindungen erfolgt. Entsprechend einer weiteren Ausführungsmöglichkeit erfolgt die Verbindung des Innenteils mit dem Außenteil über das konisch zulaufend gebogene Blech, welches zwischen Innenteil und Außenteil angeordnet ist und mittels Schraubverbindungen an der vom ersten Teilbereich abgewandten Stirnseite des zweiten Teilbereiches mit dem Außenteil verbunden ist. Vorzugsweise wird das konische Blech unter Bildung eines Zwischenraumes in vertikaler Richtung zwischen Außenteil im zweiten Teilbereich und Innenteil zur Aufnahme eines Anschlagklotzes zwischen diesen beiden Bauelementen angeordnet. Über diesen können Extremlasten in vertikaler Richtung aufgenommen werden.

Gemäß einer besonders vorteilhaften Weiterentwicklung umschließt das Außenteil das Innenteil vollständig in Umfangsrichtung. Damit wird auch bei etwaigem Versagen eines Bauteiles eine Nothaltung möglich, was die Sicherheit des Gesamtsystems erhöht.

Die Anlage- und Kontaktflächen werden vorzugsweise von Flächenbereichen auf der vom Innenteil abgewandten Stirnseite des ersten Teilbereiches des Außenteils direkt gebildet. Gemäß einer besonders vorteilhaften Ausführung wird am Außenteil im ersten Teilbereich mittig angeordnet ein Hinterschnitt zur Realisierung einer formschlüssigen Verbindung mit einem Anschlussbauteil vorgesehen. Damit wird es möglich auch große Lasten in Längsrichtung zu übertragen.

Extremlasten in allen Richtungen können ferner durch einen über das Fertigungsmaß in Längsrichtung einstellbaren Anschlag, eine in Vertikalrichtung einschiebbare Druckplatte und/oder auf Maß eingestellte seitlich angeschraubte Anschlagbügel in Querrichtung in jede Belastungsrichtung übertragen werden. Die einzelnen Anschläge können dabei in Abhängigkeit vom Einsatzfall für eine Mehrzahl von Lagern aufgrund der Ausbildung dieser Eigenschaften an Zusatzelementen auf einfache und kostengünstige Art und Weise unterschiedlich ausgebildet werden.

Das Innenteil ist mit einer Ausnehmung, vorzugsweise in Form einer Durchgangsöffnung zur Aufnahme eines Lagerbolzens versehen. Vorzugsweise werden in diesem extremgroße Lagerbolzen mit einem Durchmesser größer als 40 mm, vorzugsweise größer als 50 mm vorgesehen.

Die erfindungsgemäße Lösung ermöglicht es, dynamische Kräfte in Längs-, Quer- und /oder Vertikalrichtung innerhalb der Lagerkennlinie weich ohne Anschlag aufzunehmen. Zur Aufnahme von Extremlastenkönnen entsprechend des Einsatzfalles zusätzliche Anschläge vorgesehen werden.

Das erfindungsgemäße Lager eignet sich insbesondere für den Einsatz zur Lagerung eines Rahmens an einem Anschlussbauteil, insbesondere einem Wagenkasten in einem Schienenfahrzeug.

Die erfindungsgemäße Lösung wird nachfolgend anhand von Figuren erläutert. Darin ist im Einzelnen folgendes dargestellt:
- Figur 1: verdeutlicht in schematisch vereinfachter Darstellung anhand einer Perspektivansicht den Grundaufbau eines erfindungsgemäß gestalteten Lagers;
- Figur 2: verdeutlicht in schematisch vereinfachter Darstellung eine bevorzugte Anwendung eines erfindungsgemäß gestalteten Lagers zur Lagerung eines Rahmens eines Schienenfahrzeuges.

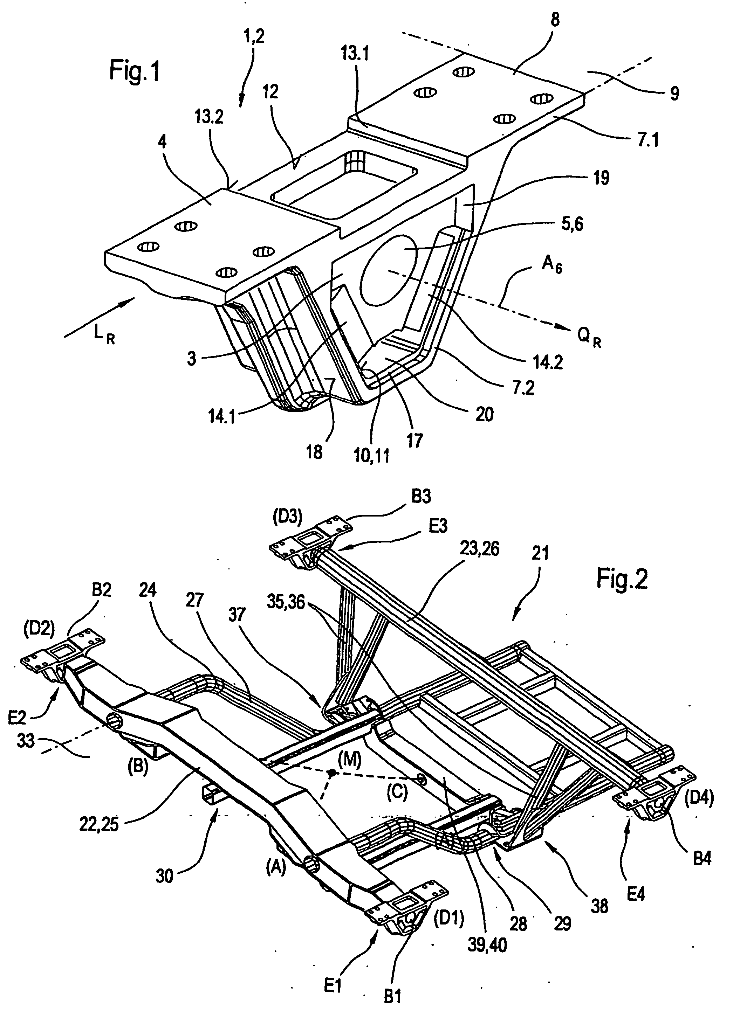

Die Figur 1 verdeutlicht in perspektivischer Ansicht ein erfindungsgemäß gestaltetes Lager 1, insbesondere Keillager 2. Dieses ist wenigstens zweiteilig ausgebildet, umfasst wenigstens ein Innenteil 3 zur Aufnahme eines Lagerbolzens und ein das Innenteil 3 umschließendes Außenteil 4 und ist hinsichtlich der Geometrie vorzugsweise durch einen im Wesentlichen symmetrischen Aufbau sowohl in Längsals auch Querrichtung LR und QR charakterisiert. Die Richtungsangaben Längsrichtung LR und Querrichtung QR sind durch Pfeile verdeutlicht und beziehen sich auf die üblicherweise bei Anwendung des Lagers 1 in einem Schienenfahrzeug zur Lagerung von Querträgern erforderliche Einbaulage. Zur Aufnahme des Lagerbolzens ist eine Ausnehmung 5 am Innenteil 3 vorgesehen. Diese ist vorzugsweise als Durchgangsöffnung 6 ausgebildet, die hinsichtlich der geometrischen Form bzw. des Querschnittes an die Geometrie des Lagerbolzens angepasst ist, welche im dargestellten Fall als Durchgangsbohrung mit kreisrundem Querschnitt, die durch eine Achse A₆ charakterisiert ist, ausgeführt ist. Das Innenteil 3 ist reversibel mit dem Außenteil 4 verbunden. Die Verbindung kann dabei durch Kraft- und/oder Formschluss erzeugt werden, beispielsweise Schraub- oder Klemmverbindungen. Das Lager 1 ist frei von einem Lagergehäuse. Die Funktion der Anlage- und Kontaktflächen 8 zur Verbindung des Lagers 1 mit einem anderen Bauteil, beispielsweise beim Einsatz des Lagers 1 zur Lagerung eines Rahmens in einem Schienenfahrzeug an einem Wagenkasten, wird vom Außenteil 4 übernommen. D. h. der Außenteil 4 ist direkt und eigenschaftstypisch ohne Hilfsgehäuse an die Längsprofile des Wagenkastens zu montieren. Das Außenteil 4 umfasst dazu wenigstens zwei Teilbereiche 7.1 und 7.2, die miteinander eine bauliche Einheit bilden, wobei das Außenteil 4 vorzugsweise einteilig ausgeführt ist. Der erste Teilbereich 7.1 bildet dabei die Anlage- und Kontaktflächen 8 zur Anlage des Lagers 1 an einem Bauelement. Diese sind dabei vorzugsweise in einer Ebene, die parallel zu einer von der Achse A6 und einer Senkrechten dazu in horizontaler Richtung aufgespannten Ebene angeordneten Ebene 9 angeordnet. Werden im Innenteil 3 in Querrichtung verlaufende bzw. ausgerichtete Tragelemente bzw. Lagerbolzen gelagert, erfolgt die Ausrichtung des ersten Teilbereiches 7.1 in Längsrichtung. Dies bedeutet, dass der erste Teilbereich 7.1 sich bezogen auf eine Senkrechte A_{S} in vertikaler Richtung zur Achse A₆ beidseitig erstreckt. Die Verbindung von erstem und zweiten Teilbereich 7.1 und 7.2 ist durch eine im Querschnitt im Wesentlichen keilförmig gestaltete Ausnehmung 10, insbesondere Durchgangsöffnung 11 charakterisiert, die der Umschließung des Innenteils 3 dient. Der zweite Teilbereich 7.2 ist dazu vorzugsweise v-förmig ausgestaltet, wobei auch die Möglichkeit besteht lediglich die Ausnehmung 10 derart zu gestalten unabhängig von der den Außenumfang 18 charakterisierenden Geometrie. Da das Innenteil 3 vom Außenteil 4 umhüllt bzw. umgriffen wird, wird auch bei einem eventuellen Versagen eines Bauteiles eine Nothaltung durch Formschluss erreicht.

Zur Übertragung größerer Lasten, insbesondere in Längsrichtung ist am Außenteil 4, insbesondere im Teilbereich 7. 1 mittig ein Hinterschnitt 12 vorgesehen, der eine formschlüssige Verbindung mit dem Bauteil ermöglicht, an welchem das im Lager 1 zu lagernde Bauteil anzulenken ist. Der Hinterschnitt 12 bildet dabei wenigstens zwei Anschlagflächen 13.1 und 13.2 zur Realisierung eines Formschlusses beispielsweise mit dem Wagenkasten in Längsrichtung.

Zwischen Innenteil 3 und Außenteil 4, insbesondere dem Außenumfang des Innenteils 3 und dem Innenumfang des Außenteils 4 im zweiten Teilbereich 7.2 sind elastische Elemente 14.1, 14.2, die vorzugsweise in Form von Gummipaketen ausgebildet sind, vorgesehen. Die reversible, d. h. lösbare Verbindung erfolgt durch Vorsehen eines entsprechend der Innenkontur des Außenteils 4 gebogenen konisch zulaufenden Bleches 17, welches zwischen Innenteil 3 und Innenumfang angeordnet ist und von unten, d. h. im Teilbereich 7.2 mit diesem und dem Innenteil 3 beispielsweise verschraubt wird. Eine andere Möglichkeit besteht im Verklemmen, wobei diese zusätzlich durch Befestigungsmittel gesichert wird. Die elastischen Elemente 14.1 und 14.2 sind dann zwischen Innenteil 3 und konischem Blech 17 angeordnet. Diese können als separate Elemente vorliegen oder aber mit dem Innenteil 3 verbunden, beispielsweise an dieses anvulkanisiert sein.

Mit dem erfindungsgemäß gestalteten Lager 1 ist es möglich, dynamische Kräfte sowohl in Längs- als auch Querrichtung und Vertikalrichtung innerhalb der Lagerkennlinie weich ohne Anschlag aufzunehmen. Extremlasten können durch einen über das Fertigungsmaß in Längsrichtung einstellbaren Anschlag 19 bzw. eine hier nicht dargestellte einschiebbare Druckplatte in Vertikalrichtung in den Zwischenraum 20 zwischen Blech 17 und Innenteil 3, der in vertikaler Richtung auf der vom ersten Teilbereich 7.1 abgewandten Stirnseite des Innenteils 3 begrenzt wird, und einen auf Maß eingestellten und hier ebenfalls nicht dargestellten seitlich angeschraubten Anschlagbügel in Querrichtung, wobei die Einstellung abhängig von en vorliegenden Randbedingungen erfolgt, in jede Belastungsrichtung übertragen werden. Der Anschlag 19 kann ferner durch materialmäßige Integration im Außenteil 4 gebildet werden.

Die Figur 2 verdeutlicht in schematisch vereinfachter Darstellung anhand des Grundaufbaus eines Rahmens 21 das Grundprinzip eines zweistufigen Lagerungskonzeptes von Antriebsaggregaten unter Verwendung des erfindungsgemäß gestalteten Lagers 1. Der Rahmen 21 umfasst mindestens zwei Querträger 22 und 23 zur Anlenkung des Rahmens 21 beim Einsatz in Fahrzeugen beispielsweise an einen Wagenkasten, wobei die Querträger 22 und 23 über mindestens einen Längsträger 44 miteinander verbunden werden. Der Querträger 22 ist dabei als Hauptquerträger 25 ausgeführt, während der Querträger 23 die Funktion des Nebenquerträgers 26 übernimmt. Dabei wird die zu lagernde Hauptmasse M, bei welcher es sich beispielsweise um die Antriebsmaschine oder eine Einheit aus Antriebsmaschine und Getriebe, d. h. eine Motorgetriebeeinheit handelt, primär im Rahmen 21 mittels hinsichtlich Steifigkeit- und Dämpfung exakt definierter elastischer Lager in den Lagerstellen A, B und C gelagert und der gesamte Rahmen 21 mit den restlichen Aggregaten gegenüber dem Fahrzeug wieder in speziellen sogenannten sekundären Lagern D1 bis D4, welche jeweils den Querträgern 22 und 23 zugeordnet sind und die entsprechend Figur 1 ausgebildet sind. Die sekundären Lager D1 und D2 dienen dabei der Lagerung des Hauptquerträgers 25, beispielsweise an einem Wagenkasten beim Einsatz in Schienenfahrzeugen und damit indirekt der Lagerung der Hauptmasse M an diesem. Die Lager D1 und D2 sind vorzugsweise in den Endbereichen E1 und E2 des Hauptquerträgers 25 diesem zugeordnet beziehungsweise lagern diesen. Dies gilt in Analogie auch für den Nebenquerträger 26. Hier sind die beiden sekundärseitigen Lager D3 und D4 ebenfalls den quer zur Fahrtrichtung in einem Lager betrachtet äußeren Abmessungen des Nebenquerträgers 26 zugeordnet, das heißt den Endbereichen E3 und E4. Vorzugsweise sind zu diesem Zweck am Hauptquerträger 25 und am Nebenquerträger 6 entsprechende Lagerbolzen B1 und B2 für den Hauptquerträger und B3 und B4 für den Nebenquerträger 26 angeordnet, die dann in den Lagern D1 bis D4 fixiert werden. Die Lagerbolzen B1 bis B4 sind form- und/oder kraftschlüssig und/oder stoffschlüssig mit dem entsprechenden Querträger - Hauptquerträger 25 oder Nebenquerträger 26 - verbunden oder aber bilden eine bauliche Einheit mit diesem.

Der Längsträger 24 umfasst wenigstens zwei Längsträgerelemente 27 und 28, die sich parallel in Längsrichtung des Rahmens 21, beim Einbau im Fahrzeug vorzugsweise parallel zur Fahrtrichtungsachse erstrecken und der Verbindung zwischen dem Hauptquerträger 25 und dem Nebenquerträger 26 dienen, wobei die Anlenkung der Längsträgerelemente 27 und 28 an die einzelnen Querträger 22 und 23 jeweils symmetrisch erfolgt. Der Hauptquerträger 25 dient dabei der Aufnahme und Übertragung der Hauptlast in alle Richtungen, während der Nebenquerträger 26 zur Aufnahme der Stützkräfte der Hauptmasse M, insbesondere der Motor-Getriebeeinheit sowie den Hauptanteil der Massenkräfte aus Hilfs- beziehungsweise Zusatzaggregaten dient. Der Längsträger 24, insbesondere die Längsträgerelemente 27, 28 sind dabei in Längsrichtung durchgehend über deren Erstreckung ausgebildet. Andere Ausführungen bei denen der Längsträger aus einer Vielzahl in dieser Richtung aneinander gereihter und lösbar oder unlösbar miteinander verbundener Elemente besteht, sind ebenfalls denkbar. Die Längsträgerelemente 27 und 28 sind definiert gebogen und bilden eine Montage- und Anordnungsebene 29 für die Hauptmasse M beziehungsweise zur Anlenkung eines Hilfsrahmens 30 zur Lagerung der Hauptmasse M. Die Biegung ist derart ausgebildet, dass die Verbindung 31 und 32 des Längsträgers 24, insbesondere der Längsträgerelemente 27 und 28 mit dem Hauptquerträger 25 in der durch den Hauptquerträger 25 und einer Senkrechten in Längsrichtung dazu gebildeten Ebene 33 erfolgt. Die Verbindung 31 bzw. 32 der Längsträgerelemente 27 und 28 mit dem Hauptquerträger 25 erfolgt dabei vorzugsweise biegesteif. Die Anbindung der Montage- und Anordnungsebene 29 an den Nebenquerträger 26 erfolgt unter Zwischenschaltung von Stützträgern 35 und 36, wobei diese jeweils einem der Längsträgerelemente 27 und 28 zugeordnet sind und die Längsträgerelemente 27 und 28 mit dem Nebenquerträger 26 verbinden. Vorzugsweise erfolgt die Anbindung elastisch, so dass hier eine angepasste elastische Verbindung zwischen Längsträger 24 und Nebenquerträger 26 möglich ist. Diese kann dabei in der Verbindung zwischen den Längsträgerelementen 27 und 28 und den Stützträgern 35 und 36 bei gleichzeitiger biegesteifer Anbindung der Stützträger 35 beziehungsweise 36 an den Nebenquerträger 26 oder aber durch biegesteife Anbindung der Längsträgerelemente 27 und 28 an die Stützträger 35 und 36 und elastische Anbindung der Stützträger 35 und 36 an den Nebenquerträger 26 erfolgen. Im vorliegenden Fall sind die Verbindungen 37 und 38 zwischen Stützträger- und Längsträgerelementen 27 und 28 elastisch ausgeführt. Mit dieser Lösung werden die einzelnen sekundären Aufhängepunkte des den Rahmen 21 bildenden Traggestells nicht direkt verbunden, also quasi ausgestützt. Infolge der Biegung des Längsträgers 24 kann eine Biegeverformung auf dessen gesamter freier Länge stattfinden, die demnach betraglich mindestens auf der Stützweite zwischen Haupt- und Nebenquerträger 25 beziehungsweise 26 wirkt. Im Ergebnis wird dadurch eine Entkopplung der Belastung und der Kräfte zwischen den Haupt- und Nebenquerträgern 25 und 26 erzielt, da der für die Übertragung der Kraft notwendige Lagerweg durch die flexiblen Längsträgerelemente 27 und 28 teilweise übernommen und kompensiert wird. Kommt es zum Beispiel zu einer Belastung in Längsrichtung des Rahmens 21, wird die Hauptlast vom Hauptquerträger 25 übernommen, da dieser erfindungsgemäß die Längsbelastung aus der Hauptmasse M übernimmt. Im umgekehrten Fall führt aber auch eine Belastung infolge der Verdrillung oder Verbiegung des Wagenkastens nicht zu undefinierten Belastungen in der Rahmenstruktur, die schließlich statisch unbestimmt in den wie in Figur 1 ausgeführten Sekundärlagern D1, D2 und D3, D4 gelagert wird. Wagenkasten und Antriebseinheit, d. h. Hauptmasse M, sind besser voneinander entkoppelt.

Die Hauptmasse M, welche beispielsweise von einer Motor-Getriebeeinheit gebildet wird, ist erfindungsgemäß an drei Stellen definiert gelagert. Diese sind mit A, B und C bezeichnet und definieren sogenannte Lasteinleitungsstellen. A und B definieren dabei die Lastanleitung in den Hauptträger. Da der Schwerpunkt der zu lagernden Masse M nahe an der Verbindungsachse zwischen den Lagerstellen A und B liegt, wird entsprechend der Hebelverhältnisse der Hauptanteil der vertikalen Belastung in den Hauptquerträger 25 eingeleitet. Die an der Lagerstelle C entstehenden Lasten sind über die Längsträgerelemente 27, 28, die am Nebenträger 26 ortsnah im gleichen Bereich in Längsrichtung betrachtet über Stützträger 35, 36, angeschlossen sind, abzuleiten. Bei Verwendung eines quer aussteifenden Profils wären in der Folge die Entstehung von Torsionsmomenten im Übergang auf die Längsträgerelemente zu beobachten, also hauptsächlich im Bereich der Anschlussschweißnähte der Verbindung zwischen der Querverbindung zwischen den beiden Längsträgerelementen 27 und 28, die hier mit 39 bezeichnet ist. Daher wird erfindungsgemäß der Übergang gelenkig gestaltet, so dass nur Querkräfte eingeleitet werden können. Im Ergebnis entsteht eine sogenannte Wippe 40, die die Verbindung beschreibt und die in ihrem Mittenbereich, vorzugsweise mittig zwischen den beiden Längsträgerelementen 27 und 28, die Lagerstelle C aufweist und an den Enden 41 und 42 an den Längsträgerelementen 27 und 28 gelagert ist. Die Eigenschaft der Gelenkigkeit an den Enden 41 und 42 ist entweder durch das Vorsehen entsprechender Gummielemente erzielbar oder kann durch Buchsen, Gabelköpfe oder andere konstruktive Maßnahmen in Abhängigkeit des speziellen Einsatzfalles umgesetzt werden.

### Bezugszeichenliste

- 1: Lager
- 2: Keillager
- 3: Innenteil
- 4: Außenteil
- 5: Ausnehmung
- 6: Durchgangsöffnung
- 7.1: erster Teilbereich
- 7.2: zweiter Teilbereich
- 8: Anlage- und Kontaktfläche
- 9: Ebene
- 10: Ausnehmung
- 11: Durchgangsöffnung
- 12: Hinterschnitt
- 13.1: Anschlagfläche
- 13.2: Anschlagfläche
- 14.1: elastische Elemente
- 14.2: elastische Elemente
- 17: konisches Blech
- 18: Außenumfang des Außenteils im weiten Teilbereich
- 19: Anschlag in Längsrichtung
- 20: Zwischenraum
- 21: Rahmen
- 22: Querträger
- 23: Querträger
- 24: Längsträger
- 25: Hauptquerträger
- 26: Nebenquerträger
- 27: Längsträgerelement
- 28: Längsträgerelement
- 29: Montage- und/oder Anordnungsebene
- 30: Hilfsrahmen
- 31: Verbindung
- 32: Verbindung
- 33: Ebene
- 35: Stützträger
- 36: Stützträger
- 37: Verbindung zwischen Stützträger und Längsträgerelement
- 38: Verbindung zwischen Stützträger und Längsträgerelement
- 39: Querverbindung
- 30: Wippe
- 41: Endbereich der Wippe
- 42: Endbereich der Wippe
- M: Hauptmasse
- F_{V}: Kraft in vertikaler Richtung
- F_{L}: Kraft in Längsrichtung
- A_{D1-D2}: Verbindungsachse
- A_{A-B}: Verbindungsachse
- D1, D2, D3, D4: Lager
- E1, E2, E3, E4: Endbereich
- B1, B2, B3, B4: Lagerbolzen

## Patentansprüche

1. Lager (1), insbesondere Keillager (2)
1.1 mit wenigstens zwei Teilelementen- einem Innenteil (3) zur Aufnahme eines Lagerbolzens und einem das Innenteil (3) wenigstens teilweise umschließenden Außenteil (4);
1.2 Innenteil (3) und Außenteil (4) sind lösbar miteinander verbunden;
1.3 das Lager (1) ist frei von einem Gehäuse;
1.4 das Außenteil (4) umfasst wenigstens zwei Teilbereiche - einen ersten Teilbereich (7.1), der die Anschlag- und Kontaktflächen (13.1, 13.2) bei Verbindung des Lagers (1) mit einem Anschlussbauelement bildet und einen zweiten Teilbereich (7.2), der mit dem ersten Teilbereich (7.1) das Innenteil (3) wenigstens teilweise bezogen auf die Achse des Lagerbolzens in Umfangsrichtung umschließt;
1.5 die Anlage- und Kontaktflächen (8) zur Verbindung mit einem Anschlussbauelement sind am Außenteil (4) angeordnet;
1.6 mit wenigstens einem zwischen Innenteil (3) und Außenteil (4) angeordneten elastischen Element (14.1, 14.2) mit einer Steifigkeit in einem Bereich von einschließlich 500 bis einschließlich 10.000 N/mm;
1.7 die Verbindung des Innenteils (3) mit dem Außenteil (4) erfolgt über ein konisch zulaufendes gebogenes Element, insbesondere Blech (17), welches zwischen Innenteil (3) und Außenteil (4) angeordnet ist;

2. Lager (1) nach Anspruch 1, **dadurch gekennzeichnet, dass** das Außenteil (4) das Innenteil (3) in Umfangsrichtung vollständig umschließt.

3. Lager (1) nach einem der Ansprüche 1 oder 2, **dadurch gekennzeichnet, dass** die Anlage- und Kontaktflächen (8) von Flächenbereichen auf der vom Innenteil (3) abgewandten Stirnseite des ersten Teilbereiches (7.1) des Außenteils (4) gebildet werden.

4. Lager (1) nach einem der Ansprüche 1 bis 3, **dadurch gekennzeichnet, dass** am Außenteil (4) im ersten Teilbereich (7.1) mittig ein Hinterschnitt (12) zur Realisierung einer formschlüssigen Verbindung mit einem Anschlussbauteil vorgesehen ist.

5. Lager (1) nach einem der Ansprüche 1 bis 4, **dadurch gekennzeichnet, dass** das elastische Element (14.1, 14.2) als Gummi-Paket ausgeführt ist.

6. Lager (1) nach einem der Ansprüche 1 bis 5, **dadurch gekennzeichnet, dass** das elastische Element (14.1, 14.2) mit dem Innenteil (3) eine bauliche Einheit bildet.

7. Lager (1) nach Anspruch 6, **dadurch gekennzeichnet, dass** das elastische Element (14.1, 14.2) am Innenteil (3) oder dem Element (17) anvulkanisiert ist, welches das Innenteil (3) und das elastische Element (14.1, 14.2) wenigstens teilweise in Umfangsrichtung umschließt.

8. Lager (1) nach einem der Ansprüche 1 bis 7, **dadurch gekennzeichnet, dass** das Innenteil (3) oder die Einheit aus Innenteil (3) und konisch zulaufenden Element (17)mittels Presspassung mit dem Außenteil (4) verbunden ist.

9. Lager (1) nach einem der Ansprüche 1 bis 8, **dadurch gekennzeichnet, dass** das Innenteil (3) über im Bereich des elastischen Elementes (14.1, 14.2) angeordnete Befestigungsmittel mit dem Außenteil (4) verbunden ist.

10. Lager (1) nach einem der Ansprüche 1 bis 9, **gekennzeichnet durch** das folgende Merkmal:
10.1. das konische Blech (17) wird mittels Schraubverbindungen an der vom ersten Teilbereich (7.1) abgewandten Stirnseite des zweiten Teilbereiches (7.2) mit dem Außenteil (4) verbunden.

11. Lager (1) nach einem der Ansprüche 1 bis 10, **dadurch gekennzeichnet, dass** das konische zulaufend gebogene Blech (17) mit dem Innenteil (3) eine bauliche Einheit bildet.

12. Lager (1) nach einem der Ansprüche 1 bis 11, **dadurch gekennzeichnet, dass** das konische Blech (17) unter Bildung eines Zwischenraumes (20) in vertikaler Richtung zwischen dem Außenteil (4) im zweiten Teilbereich (7.2) und Innenteil (3) zur Aufnahme eines Anschlagklotzes zwischen diesen beiden Bauelementen angeordnet ist.

13. Lager (1) nach einem der Ansprüche 1 bis 12, **dadurch gekennzeichnet, dass** das Außenteil (4) in Längsrichtung an seinem das Innenteil (3) umschließenden Innenumfang durch Wahl der Fertigungstoleranz einen Anschlag (19) in Vertikal- und/oder Längsrichtung bildet.

14. Lager (1) nach einem der Ansprüche 1 bis 13, **dadurch gekennzeichnet, daß** ein Anschlag in Querrichtung vorgesehen ist, der von einem mit dem Außenteil (4) verschraubten Bügel oder einem an diesem angeformten Bügel gebildet wird.

15. Rahmen (21)
15.1 mit mindestens zwei Querträgern (22, 23, 25, 26), die über einen Längsträger (24) unter Bildung einer zu den Querträgern in vertikaler Richtung versetzt angeordneten Montage- und/oder Anordnungsebene (29) für die Hauptmasse (M) miteinander verbunden sind;
15.2 die Hauptmasse (M) ist primär im Rahmen (21) gelagert;
15.3 mit den Querträgern (22, 23, 25, 26) zugeordneten Lagern (D1, D2, D3, D4), die der Anbindung des Rahmens an einem Anschlussbauteil, insbesondere einem Wagenkasten, dienen, gemäß einem der Ansprüche 1 bis 14.

## Claims

1. A bearing (1), especially a fluidfilm bearing (2);
1.1 with at least two partial elements, an inner part (3) for receiving a bearing pin and an outer part (4) enclosing the inner part (3) at least partly;
1.2 with the inner part (3) and the outer part (4) being detachably connected with each other;
1.3 with the bearing (1) being free from a housing;
1.4 with the outer part (4) comprising at least two partial regions, a first partial region (7.1) forming the stop and contact surfaces (13.1, 13.2) when joining the bearing (1) with a connecting module and a second partial region (7.2) which encloses with the first partial region (7.1) the inner part (3) in the circumferential direction at least partly relative to the axis of the bearing pin;
1.5 with the bearing and contact surfaces (8) for joining with a connecting module being arranged on the outer part (4);
1.6 with at least one elastic element (14.1, 14.2) arranged between inner part (3) and outer part (4) with a stiffness in a region of including 500 N/mm up to and including 10,000 N/mm;
1.7 with the connection of the inner part (3) with the outer part (4) occurring via a conically tapering bent element, especially a sheet metal (17) which is arranged between inner part (3) and outer part (4);

2. A bearing (1) according to claim 1, **characterized in that** the outer part (4) fully encloses the inner part (3) in the circumferential direction.

3. A bearing (1) according to one of the claims 1 or 2, **characterized in that** the bearing and contact surfaces (8) are formed by surface areas on the face side of the first partial region (7.1) of the outer part (4), which face side is averted from the inner part (3).

4. A bearing (1) according to one of the claims 1 to 3, **characterized in that** an undercut (12) for realizing an interlocking connection with a connecting module is provided on the outer part (4) in the first partial region (7.1) in the center.

5. A bearing (1) according to one of the claims 1 to 4, **characterized in that** the elastic element (14.1, 14.2) is configured as a rubber package.

6. A bearing (1) according to one of the claims 1 to 5, **characterized in that** the elastic element (14.1, 14.2) forms a modular unit with the inner part (3).

7. A bearing (1) according to claim 6, **characterized in that** the elastic element (14.1, 14.2) is vulcanized onto the inner part (3) or the element (17) which encloses the inner part (3) and the elastic element (14.1, 14.2) at least partly in the circumferential direction.

8. A bearing (1) according to one of the claims 1 to 7, **characterized in that** the inner part (3) or the unit made of inner part (3) and conically tapering element (17) is joined to the outer part (4) by means of press fit.

9. A bearing (1) according to one of the claims 1 to 8, **characterized in that** the inner part (3) is connected with the outer part (4) by way of fastening means arranged in the region of the elastic element (14.1, 14.2).

10. A bearing (1) according to one of the claims 1 to 9, **characterized by** the following feature:
10.1 the conical sheet metal (17) is joined to the outer part (4) by means of screwed joints at the face side of the second partial region (7.2) averted from the first partial region (7.1).

11. A bearing (1) according to one of the claims 1 to 10, **characterized in that** the conically tapering bent sheet metal (17) forms a modular unit with the inner part (3).

12. A bearing (1) according to one of the claims 1 to 11, **characterized in that** the conical sheet metal (17) is arranged for forming an intermediate space (20) in the vertical direction between the outer part (4) in the second partial region (7.2) and the inner part (3) for receiving a stop block between two said components.

13. A bearing (1) according to one of the claims 1 to 12, **characterized in that** the outer part (4) forms a stop (19) in the vertical and/or longitudinal direction on its inner circumference enclosing the inner part (3) in the longitudinal direction by choice of production tolerance.

14. A bearing (1) according to one of the claims 1 to 13, **characterized in that** a stop is provided in the transversal direction which is formed by a bracket screwed together with the outer part (4) or by a bracket formed on the same.

15. A frame (21);
15.1 with at least two crossbeams (22, 23, 25, 26) which are joined with each other by means of a longitudinal beam (24) by forming a mounting and/or configuration plane (29) for the bulk, which plane is arranged offset relative to the crossbeams in the vertical direction;
15.2 the bulk (M) is held primarily in the frame (21);
with bearings (D1, D2, D3, D4) which are associated with the crossbeams (22, 23, 25, 26) which are used for linking the frame to a connecting component, especially a body, according to one of the claims 1 to 14.

## Revendications

1. Palier (1), en particulier palier à coin (2),
1.1 avec au moins deux parties : une partie intérieure (3) destinée à recevoir une broche de palier et une partie extérieure (4) entourant au moins partiellement la partie intérieure (3) ;
1.2 la partie intérieure (3) et la partie extérieure (4) sont reliées l'une à l'autre de façon amovible ;
1.3 le roulement (1) ne possède pas de boîtier ;
1.4 la partie extérieure (4) comprend au moins deux segments : un premier segment (7.1) qui forme les surfaces de butée et de contact (13.1, 13.2) lors de l'assemblage du roulement (1) avec un élément de raccordement, et un second segment (7.2) qui, avec le premier segment (7.1), entoure au moins partiellement la partie intérieure (3) dans le sens de la circonférence par rapport à l'axe de la broche de palier ;
1.5 les surfaces d'appui et de contact (8) pour l'assemblage avec un élément de raccordement sont disposées sur la partie extérieure (4) ;
1.6 avec au moins un élément élastique (14.1, 14.2) disposé entre la partie intérieure (3) et la partie extérieure (4) et ayant une rigidité comprise entre 500 N/mm et 10.000 N/mm inclus ;
1.7 l'assemblage de la partie intérieure (3) avec la partie extérieure (4) est réalisé à l'aide d'un élément courbe conique, en particulier une tôle (17), qui est disposé entre la partie intérieure (3) et la partie extérieure (4).

2. Palier (1) selon la revendication 1, **caractérisé en ce que** la partie extérieure (4) entoure complètement la partie intérieure (3) dans le sens de la circonférence.

3. Palier (1) selon l'une quelconque des revendications 1 ou 2, **caractérisé en ce que** les surfaces d'appui et de contact (8) sont formées par des zones de surface sur la face du premier segment (7.1) de la partie extérieure (4) orientée à l'opposé de la partie intérieure (3).

4. Palier (1) selon l'une quelconque des revendications 1 à 3, **caractérisé en ce qu'**il est prévu sur la partie extérieure (4) au milieu du premier segment (7.1) une dépouille (12) destinée à réaliser un assemblage par engagement de forme avec un premier élément de raccordement.

5. Palier (1) selon l'une quelconque des revendications 1 à 4, **caractérisé en ce que** l'élément élastique (14.1, 14.2) est réalisé comme un paquet de caoutchouc.

6. Palier (1) selon l'une quelconque des revendications 1 à 5, **caractérisé en ce que** l'élément élastique (14.1, 14.2) forme avec la partie intérieure (3) une unité de construction.

7. Palier (1) selon la revendication 6, **caractérisé en ce que** l'élément élastique (14.1, 14.2) est fixé par vulcanisation sur la partie intérieure (3) ou l'élément (17), qui entoure au moins partiellement dans le sens de la circonférence la partie intérieure (3) et l'élément élastique (14.1, 14.2).

8. Palier (1) selon l'une quelconque des revendications 1 à 7, **caractérisé en ce que** la partie intérieure (3) ou l'unité formée de la partie intérieure (3) et de l'élément en cône (17) est assemblée par emboîtement avec la partie extérieure (4).

9. Palier (1) selon l'une quelconque des revendications 1 à 8, **caractérisé en ce que** la partie intérieure (3) est reliée à la partie extérieure (4) par des moyens de fixation disposés au niveau de l'élément élastique (14.1, 14.2).

10. Palier (1) selon l'une quelconque des revendications 1 à 9, **caractérisé en ce que**:
10.1 la tôle conique (17) est fixée sur la partie extérieure (4) au moyen de vis sur la face du second segment (7.2) orientée à l'opposé du premier segment (7.1).

11. Palier (1) selon l'une quelconque des revendications 1 à 10, **caractérisé en ce que** la tôle conique (17) forme avec la partie intérieure (3) une unité de construction.

12. Palier (1) selon l'une quelconque des revendications 1 à 11, **caractérisé en ce que** la tôle conique (17) est disposée, en formant un espace intermédiaire (20), dans le sens vertical entre la partie extérieure (4) dans le second segment (7.2) et la partie intérieure (3) pour recevoir un sabot de butée entre ces deux éléments.

13. Palier (1) selon l'une quelconque des revendications 1 à 12, **caractérisé en ce que** la partie extérieure (4) forme dans le sens longitudinal sur sa circonférence intérieure entourant la partie intérieure (3), grâce au choix de la tolérance de fabrication, une butée (19) dans le sens vertical et/ou longitudinal.

14. Palier (1) selon l'une quelconque des revendications 1 à 13, **caractérisé en ce qu'**il est prévu une butée dans le sens transversal qui est formée par un étrier vissé sur la partie extérieure (4) ou formé solidaire de celle-ci.

15. Châssis (21)
15.1 avec au moins deux traverses (22, 23, 25, 26) reliées entre elles par un longeron (24) en formant un plan de montage et/ou de disposition (29) décalé verticalement par rapport aux traverses pour la masse principale (M) ;
15.2 la masse principale (M) est principalement supportée dans le châssis (21) ;
15.3 avec des paliers (D1, D2, D3, D4) associés aux traverses (22, 23, 25, 26) servant à la liaison du bâti avec un élément de raccordement, en particulier une caisse de véhicule, selon l'une quelconque des revendications 1 à 14.
